# EUROPEAN PATENT APPLICATION

(11) **EP 3 872 480 A1**
(43) Date of publication of application: **01.09.2021**
(21) Application number: 21155144.5
(22) Date of filing: 04.02.2021
(51) Int. Cl.: G01N 21/95, G01N 21/952, G06T 7/00, G06T 7/11, H04N 13/207, G01N 21/88

(54) **INSPECTION METHOD AND INSPECTION APPARATUS**

(30) Priority: 28.02.2020 JP 2020033485
(71) Applicant: SCREEN Holdings Co., Ltd., Kyoto 602-8585 (JP)
(72) Inventor: Sakuyama, Tsutomu, Kyoto-shi, Kyoto 602-8585 (JP)
(74) Representative: Goddar, Heinz J.

(57) **Abstract**

A workpiece is imaged from a first direction while rotating around a rotation axis, to thereby obtain an inspection image developing in a second direction orthogonal to both a rotation direction of the workpiece and the first direction. The inspection image is compared with a plurality of partial reference images, to thereby inspect the appearance of the workpiece. Specifically, the partial reference images, which are adjacent to each other in the second direction, partially overlap each other by a length not less than a dimensional tolerance of a workpiece in the second direction. Therefore, not only for the workpiece manufactured with the design dimension but also for the workpiece manufactured within the range of the dimension tolerance, it is possible to inspect the workpiece with high accuracy.

## Description

### CROSS REFERENCE TO RELATED APPLICATION

The disclosure of Japanese Patent Application No.2020-033485 filed on February 28, 2020 including specification, drawings and claims is incorporated herein by reference in its entirety.

### BACKGROUND OF THE INVENTION

### 1. Field of the Invention

The present invention relates to an inspection method and an inspection apparatus for inspecting a workpiece rotating around a rotation axis.

### 2. Description of the Related Art

An apparatus disclosed in Japanese Patent Application Laid Open Gazette No. 2018-151242, for example, acquires an inspection image by image capturing of a workpiece while rotating the workpiece around a rotation axis. Then, the apparatus inspects the workpiece by comparing the inspection image with a non-defective image (which corresponds to a "reference image" of the present invention).

### SUMMARY OF THE INVENTION

As the above non-defective image, usually, used is an image created on the basis of CAD (Computer Aided Design) data of the workpiece manufactured with a design dimension or an image obtained by image capturing of the workpiece manufactured with the design dimension. In the background art, however, depending on a dimensional tolerance, such a problem as described below sometimes arises. In the manufacture of the workpiece, a dimensional tolerance from the design dimension is allowed in some cases. In such a case, when the dimensional tolerance is relatively large, though the workpiece is manufactured within the dimension tolerance, defect judgement may be made. In more detail, the workpiece which is manufactured within the range of the dimension tolerance, has no defect, and should be originally determined as a non-defective product. However, the workpiece is sometimes wrongly determined as a defective product since sizes and shapes of the inspection image obtained by image capturing of the workpiece do not perfectly coincide with those of the non-defective image. In other words, the presence of the dimensional tolerance is one of main factors causing deterioration in the inspection accuracy.

The present invention is intended to solve the above problem, and it is an object of the present invention to provide an inspection method and an inspection apparatus which are capable of inspecting a workpiece with high accuracy, which is manufactured within the range of dimensional tolerance.

One aspect of the invention is an inspection method, comprising: continuously imaging a workpiece rotating around a rotation axis from a first direction by using an imager to obtain an inspection image which includes a partial image of the workpiece, the partial image having a constant width in a second direction orthogonal to both a rotation direction of the workpiece and the first direction and being developed in the rotation direction; storing a plurality of partial reference images used for partially inspecting an appearance of the workpiece; and inspecting the appearance of the workpiece by comparing each of the partial reference images with the inspection image, wherein two of the partial reference images, which are adjacent to each other in the second direction, partially overlap each other by a length not less than a dimensional tolerance of the workpiece in the second direction.

Other aspect of the invention is an inspection apparatus for inspecting a workpiece rotating around a rotation axis, the apparatus comprising: an imaging unit that is configured to image the workpiece from a first direction; an inspection image acquisition part that is configured to acquire an inspection image which is obtained by developing a partial image of the workpiece in a rotation direction, the partial image of the workpiece having a constant width in a second direction orthogonal to the rotation direction of the workpiece and the first direction, on the basis of image data outputted from the imager; a storage part that stores a plurality of partial reference images used for partially inspecting an appearance of the workpiece; and an inspection part that is configured to inspect the appearance of the workpiece by comparing each of the partial reference images with the inspection image, wherein two of the partial reference images, which are adjacent to each other in the second direction, partially overlap each other by a length not less than a dimensional tolerance of the workpiece in the second direction.

Thus, according to the present invention, the plurality of partial reference images which partially overlap each other by the length not less than the dimensional tolerance of the workpiece in the second direction are stored and each of the partial reference images is compared with the inspection image, to thereby inspect the appearance of the workpiece. Therefore, not only for the workpiece (hereinafter, referred to as a "standard workpiece") manufactured with the design dimension but also for the workpiece manufactured within the range of the dimension tolerance, it is possible to inspect the workpiece with high accuracy.

All of a plurality of constituent elements of each aspect of the invention described above are not essential and some of the plurality of constituent elements can be appropriately changed, deleted, replaced by other new constituent elements or have limited contents partially deleted in order to solve some or all of the aforementioned problems or to achieve some or all of effects described in this specification. Further, some or all of technical features included in one aspect of the invention described above can be combined with some or all of technical features included in another aspect of the invention described above to obtain one independent form of the invention in order to solve some or all of the aforementioned problems or to achieve some or all of the effects described in this specification.

### BRIEF DESCRIPTION OF THE DRAWINGS

FIG. 1 is a schematic diagram showing one embodiment of an inspection apparatus in accordance with the present invention;
FIG. 2 is a view taken along the line II-II indicated by arrows in the inspection apparatus of FIG. 1; and
FIG. 3 is a diagram schematically showing a method of inspecting a workpiece by using the inspection apparatus shown in FIG. 1.

### DETAILED DESCRIPTION OF THE PREFERRED EMBODIMENTS

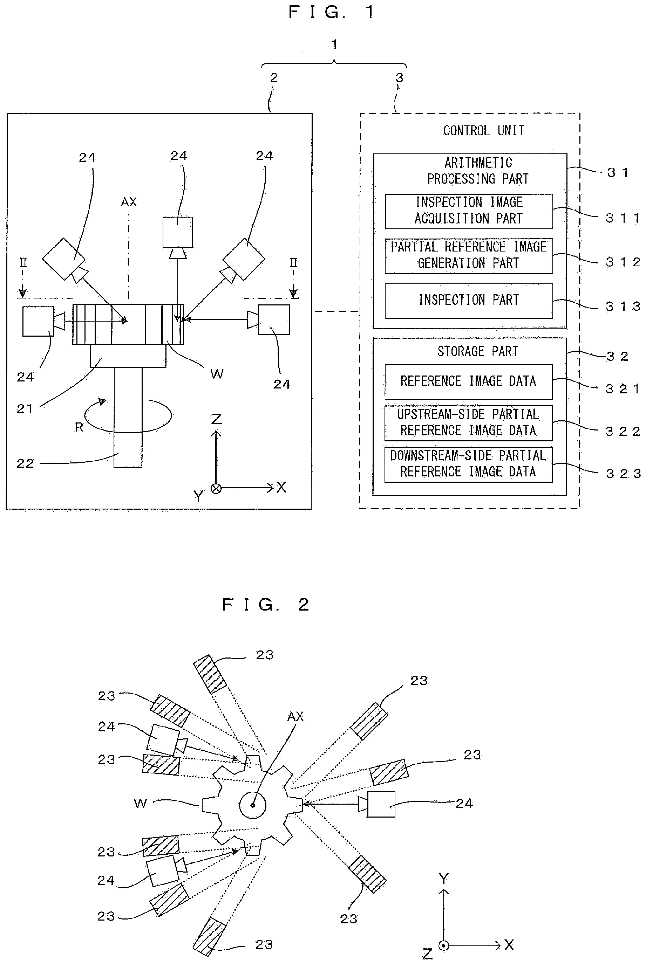

FIG. 1 is a schematic diagram showing one embodiment of an inspection apparatus in accordance with the present invention. Further, FIG. 2 is a view taken along the line II-II indicated by arrows in the inspection apparatus of FIG. 1. For the following description, XYZ coordinate axes are set as shown in FIGs. 1 and 2. Herein, the XY plane is a horizontal plane and the Z axis coincides with a vertical axis. The positive direction of the Z axis is a vertically upward direction.

An inspection apparatus 1 inspects an appearance of a workpiece which is rotationally symmetrical about a symmetry axis, and a gear, for example, is inspected as a workpiece W. The inspection apparatus 1 includes a main body 2 and a control unit 3 formed of a computer. The main body 2 images the workpiece W while causing the workpiece W to rotate at least one lap around a rotation axis AX in parallel with a vertical direction Z, and outputs image data of an inspection image to the control unit 3. Then, the control unit 3 receives the above image data and inspects the workpiece W by comparing the inspection image with a reference image.

The main body 2 has a workpiece holding part 21 which holds the workpiece W in such an orientation as to make the symmetry axis of the workpiece W coincident with the rotation axis AX. As the manner of holding the workpiece W, the workpiece W may be held mechanically like in the apparatus disclosed in Japanese Patent Application Laid Open Gazette No. 2018-151242, or may be held in any other manner, such as an suction manner. This workpiece holding part 21 is connected to a rotation shaft 22 which is extended in the vertical direction Z from a motor body (not shown). For this reason, when the motor body operates in response to a rotation command from the control unit 3 to rotate the rotation shaft 22 in a rotation direction R, the workpiece W held by the workpiece holding part 21 rotates around the rotation axis AX.

The main body 2 has a plurality of lighting parts 23 and a plurality of inspection cameras (an example of an "imager" of the present invention) 24 in order to image the workpiece W held by the workpiece holding part 21 from various directions. In FIG. 1, for clarifying an imaging direction of each inspection camera 24, the lighting parts 23 are not shown. On the other hand, though only nine lighting parts 23 for emitting illumination light to the workpiece W from a lateral direction in FIG. 2, the main body 2 is further provided with the lighting parts 23 for emitting illumination light to the workpiece W from diagonally upward and vertically upward directions. Thus, the plurality of lighting parts 23 are so arranged as to surround the workpiece W, and each of the lighting parts 23 is lit in response to a lighting command from the control unit 3. Therefore, by lighting all or some of the lighting parts 23, it is possible to illuminate the workpiece W in an illumination pattern in conformity with inspection details of the workpiece W.

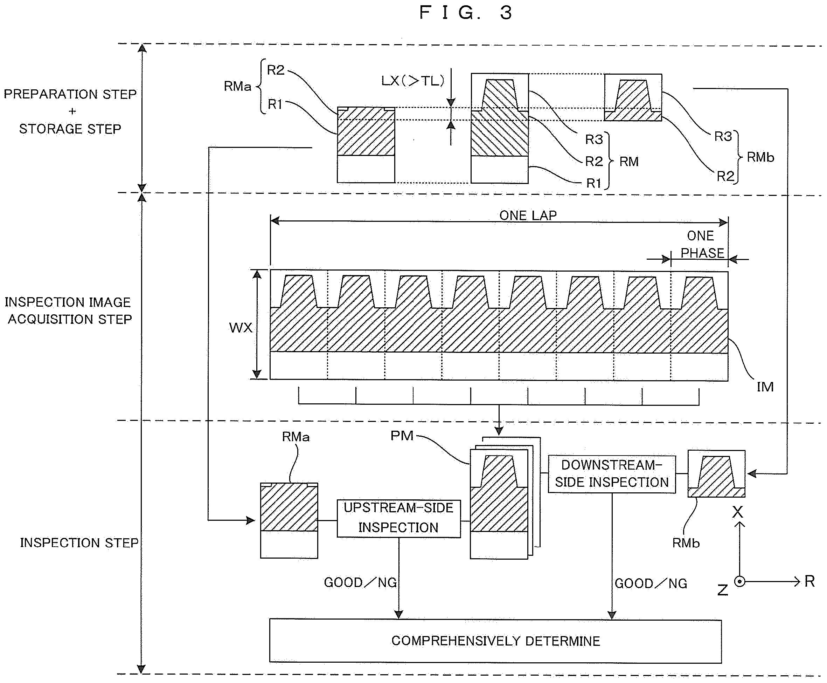

Further, in the main body 2, seven inspection cameras 24 in total, specifically three for imaging from the lateral direction, three for image pickup from the diagonally upward direction, and one for image pickup from vertically upward direction, are so arranged as to surround the workpiece W. For this reason, it is possible to pick up an image of the workpiece W from various directions, which is illuminated by the plurality of lighting parts 23. As shown in FIG. 1, for example, when the workpiece W is continuously imaged by one lap by the inspection camera 24 (hereinafter, referred to as a "directly-above inspection camera 24A") disposed directly above the rotating workpiece W, in other words, disposed in a (+Z) direction, an inspection image IM shown in the middle stage of FIG. 3, for example, can be captured. Specifically, the directly-above inspection camera 24A captures a partial image of the workpiece W rotating in the rotation direction R from a Z direction and acquires the partial image having a constant width WX (FIG. 3) in a direction X orthogonal to the imaging direction Z and the rotation direction R. Therefore, by continuously imaging the workpiece W during one lap of the rotation of the workpiece W, image data of the above partial image are sequentially transmitted to the control unit 3.

The control unit 3 has an arithmetic processing part 31 and a storage part 32. The arithmetic processing part 31 is constructed of a CPU (Central Processing Unit), a ROM (Read Only Memory) which stores therein initial settings and the like, a RAM (Random Access Memory) which temporarily stores therein various data during the operation of the apparatus, and the like. By connecting the image data outputted from the directly-above inspection camera 24A, for example, the arithmetic processing part 31 acquires the strip-like inspection image IM which is obtained by developing the above partial image in the rotation direction R. Further, like the image data of the above inspection image IM, the image data of the inspection images captured by the other inspection cameras 24 are also transmitted to the control unit 3, and the arithmetic processing part 31 generates an inspection image corresponding to the imaging direction of the inspection camera 24. Thus, the arithmetic processing part 31 serves as a so-called inspection image acquisition part 311 which acquires the inspection image obtained by developing the partial image of the workpiece W, which has a constant length in a direction (hereinafter, referred to as a "width direction") orthogonal to both the imaging direction and the rotation direction R, for each of the inspection cameras 24.

In the storage part 32, image data (hereinafter, referred to as "reference image data 321") of the reference image serving as a reference for inspecting the workpiece W is stored in advance. The reference image data 321 can be generated on the basis of, for example, the CAD data. Further, data of an image obtained by imaging the workpiece manufactured with the design dimension may be used as the reference image data 321. Herein, when the dimensional tolerance is relatively small, it is possible to inspect the workpiece W by comparing the reference image itself with the inspection image. When the dimensional tolerance is relatively large, however, though the workpiece W is manufactured within the dimension tolerance, the workpiece W is sometimes wrongly determined as a defective product since a workpiece image in the inspection image becomes too much smaller or larger than a workpiece image in the reference image in the width direction.

Then, in the present embodiment, before executing an inspection image acquisition step of acquiring the inspection image shown in the middle stage of FIG. 3, the arithmetic processing part 31 generates an upstream-side partial reference image RMa and a downstream-side partial reference image RMb as partial reference images from the reference image RM and stores respective image data thereof (upstream-side partial reference image data 322 and downstream-side partial reference image data 323) into the storage part 32. Then, as described next with reference to FIG. 3, the arithmetic processing part 31 inspects the workpiece W by using the upstream-side partial reference image RMa and the downstream-side partial reference image RMb. Thus, in the present embodiment, the arithmetic processing part 31 also serves as a partial reference image generation part 312 and an inspection part 313.

FIG. 3 is a diagram schematically showing a method of inspecting the workpiece by using the inspection apparatus shown in FIG. 1. The inspection apparatus 1 has seven inspection cameras 24 as described above, and can acquire up to seven inspection images. Then, the inspection apparatus 1 inspects the workpiece W, for each of the acquired inspection images. Herein, for easy understanding of the subject matter of the present invention, described will be a case where the workpiece W is inspected on the basis of the inspection image IM acquired by the directly-above inspection camera 24A.

Before inspecting the workpiece W, the arithmetic processing part 31 reads out the reference image data (which correspond to the non-defective image of the background art) stored in the storage part 32 in advance. Further, the arithmetic processing part 31 generates two partial reference images (an upstream-side reference image and a downstream-side reference image) used for partially inspecting the appearance of the workpiece W, from the above reference image. This is a preparation for improvement in the inspection accuracy of the workpiece W (preparation step). More specifically, the partial reference image is generated in the following manner.

The imaging direction of the directly-above inspection camera 24A is the Z direction, and the width direction orthogonal to both the imaging direction Z and the rotation direction R is an X direction. Then, as shown in the upper stage of FIG. 3, the arithmetic processing part 31 separates the reference image RM into three regions, i.e., an upstream region R1, a central region R2, and a downstream region R3 in the width direction X. Among these regions, the length LX of the central region R2 is set to be longer than the dimensional tolerance TL in the width direction X. Then, the arithmetic processing part 31 generates the upstream-side partial reference image RMa by using the upstream region R1 and the central region R2 and generates the downstream-side partial reference image RMb by using the central region R2 and the downstream region R3. It is thereby possible to acquire the upstream-side partial reference image RMa and the downstream-side partial reference image RMb which partially overlap each other in the X direction. Moreover, the overlapping range LX is longer than the dimensional tolerance TL.

Further, the arithmetic processing part 31 stores the image data of the partial reference images which are generated thus, as the upstream-side partial reference image data 322 and the downstream-side partial reference image data 323, respectively, into the storage part 32 (storage step).

After the workpiece W before being inspected is loaded into the main body 2 and held by the workpiece holding part 21, the motor body operates to start the rotation of the workpiece W. Further, in response to the rotation, the plurality of lighting parts 23 are lit and illuminate the rotating workpiece W from a plurality of directions. Note that though the lighting parts 23 are lit after the rotation of the workpiece W starts in this case, the lighting timing is not limited to this, but lighting of the lighting parts 23 may start at the same time as the start of the rotation or may start before the start of the rotation.

While the workpiece W is rotated and illuminated, the plurality of inspection cameras 24 image the workpiece W from various directions and transmit the image data of the inspection images of the workpiece W obtained from the plurality of imaging directions to the control unit 3. Among the image data, on the basis of the image data outputted from the directly-above inspection camera 24A while the workpiece W rotates one lap, the arithmetic processing part 31 acquires, for example, the inspection image IM as shown in the middle stage of FIG. 3 (inspection image acquisition step).

The arithmetic processing part 31 determines an image unit corresponding to the reference image RM as "one phase", and performs an upstream-side inspection and a downstream-side inspection on the inspection image IM for one phase (inspection step). In the upstream-side inspection, the upstream-side partial reference image data 322 is read out from the storage part 32, and a partial inspection image PM corresponding to one phase is compared with the upstream-side partial reference image RMa, to thereby inspect the upstream region of the workpiece W. Further, in the downstream-side inspection, the downstream-side partial reference image data 323 is read out from the storage part 32, and the same partial inspection image PM is compared with the downstream-side partial reference image RMb, to thereby inspect the downstream region of the workpiece W. Herein, as the inspection using the upstream-side partial reference image RMa and the downstream-side partial reference image RMb, conventionally well-known inspection methods, such as a template matching and the like, can be used.

Then, the arithmetic processing part 31 comprehensively determines respective results (GOOD/NG) of the upstream-side inspection and the downstream-side inspection and thereby comprehensively determines whether the workpiece W is good or no good. Specifically, when both the respective results of the upstream-side inspection and the downstream-side inspection are "GOOD" and the inspection results based on the inspection images acquired by the other inspection cameras 24 are "GOOD", the arithmetic processing part 31 determines the workpiece W to be a non-defective product. Further, the arithmetic processing part 31 displays the determination result on a display part which is not shown, to thereby notify a user of the result. On the other hand, when at least one of the respective results of the upstream-side inspection and the downstream-side inspection is "NG" or any one of the inspection results based on the inspection images acquired by the other inspection cameras 24 is "NG", the arithmetic processing part 31 determines the workpiece W to be a defective product and identifies a defective portion such as a flaw, a chip, or the like. Then, the arithmetic processing part 31 displays the above determination result and the defective portion on the display part, to thereby notify the user of the result.

As described above, in the present embodiment, two kinds of the upstream-side partial reference image RMa and the downstream-side partial reference image RMb which overlap each other in the X direction by the length LX not less than the above dimensional tolerance TL are prepared in advance. Then, by comparing the inspection image IM with the upstream-side partial reference image RMa and the downstream-side partial reference image RMb, respectively, by one phase, the upstream-side inspection and the downstream-side inspection are performed. Therefore, not only for the so-called standard workpiece W which is manufactured with the design dimension but also for the workpiece W which is manufactured within the range of the dimension tolerance, though not perfectly coincident with the standard workpiece W, it is possible to inspect the appearance thereof with high accuracy.

Further, in the above-described embodiment, the upstream-side inspection and the downstream-side inspection may be performed after the inspection image IM is acquired by one lap of the workpiece W. In contrast to this, the inspections may be performed every time when the partial inspection image PM corresponding to one phase is acquired, without waiting for complete acquisition of the inspection image IM. It is thereby possible to reduce the cycle time (tact time). Furthermore, in order to increase the inspection accuracy, the inspection image IM may be acquired by causing the workpiece W to rotate more than one lap.

Further, the present invention is not limited to the above-described embodiment, and various modifications of the invention other than those described above are possible without departing from the scope of the invention. For example, in the above-described embodiment, the two partial reference images (the upstream-side partial reference image RMa and the downstream-side partial reference image RMb) are used as the reference image to be compared with the inspection image IM picked up by the directly-above inspection camera 24A, correspondingly to the dimensional tolerance in the X direction. Since the inspection apparatus 1 has six inspection cameras 24 other than the directly-above inspection camera 24A, the inspection apparatus 1 may inspect the appearance of the workpiece W by comparing the inspection image with the two partial reference images, respectively, also in the other imaging directions concurrently with the inspection of the appearance of the workpiece W shown in FIG. 3.

Furthermore, with respect to a direction in which no dimensional tolerance is set or the dimensional tolerance is close to zero, like in the background art, the inspection apparatus 1 may inspect the appearance of the workpiece by using a single reference image (background-art inspection). In other words, depending on whether or not there is a dimensional tolerance in each direction, either the inspection using a single reference image like in the background art or the inspection using two partial reference images which partially overlap each other like in the above-described embodiment may be selected.

Further, though the reference image is separated into two images, i.e., the upstream-side partial reference image RMa and the downstream-side partial reference image RMb in the above-described embodiment, the number of partial reference images is not limited to two. Specifically, the inspection may be performed by using three or more partial reference images among which adjacent ones overlap each other by the dimensional tolerance or more.

Furthermore, though the present invention is applied to the inspection apparatus 1 having seven inspection cameras 24 in the above-described embodiment, the present invention can be applied to an inspection apparatus having at least one inspection camera.

The present invention can be applied to general inspection technology for inspecting a workpiece rotating around a rotation axis.

Although the invention has been described along with the specific embodiment above, this description is not intended to be interpreted in a limited sense. If the description of the invention is referred to, various modifications of the disclosed embodiment would be apparent to a person skilled in this art, similarly to other embodiments of the invention. Therefore, the appended claims are through to include these modifications or embodiments without departing from the true scope of the invention.

## Claims

1. An inspection method, comprising:
continuously imaging a workpiece rotating around a rotation axis from a first direction by using an imager to obtain an inspection image which includes a partial image of the workpiece, the partial image having a constant width in a second direction orthogonal to both a rotation direction of the workpiece and the first direction and being developed in the rotation direction;
storing a plurality of partial reference images used for partially inspecting an appearance of the workpiece; and
inspecting the appearance of the workpiece by comparing each of the partial reference images with the inspection image,
wherein two of the partial reference images, which are adjacent to each other in the second direction, partially overlap each other by a length not less than a dimensional tolerance of the workpiece in the second direction.

2. The inspection method according to claim 1, wherein
the plurality of partial reference images include an upstream-side partial reference image positioned on an upstream side in the second direction and a downstream-side partial reference image positioned on a downstream side.

3. The inspection method according to claim 2, further comprising:
preparing the upstream-side partial reference image and the downstream-side partial reference image by
separating a reference image used for inspecting the appearance of the workpiece into an upstream region, a central region longer than the dimensional tolerance of the workpiece, and a downstream region in the second direction,
generating the upstream-side partial reference image by using the upstream region and the central region, and
generating the downstream-side partial reference image by using the downstream region and the central region.

4. An inspection apparatus for inspecting a workpiece rotating around a rotation axis, the apparatus comprising:
an imaging unit that is configured to image the workpiece from a first direction;
an inspection image acquisition part that is configured to acquire an inspection image which is obtained by developing a partial image of the workpiece in a rotation direction, the partial image of the workpiece having a constant width in a second direction orthogonal to the rotation direction of the workpiece and the first direction, on the basis of image data outputted from the imager;
a storage part that stores a plurality of partial reference images used for partially inspecting an appearance of the workpiece; and
an inspection part that is configured to inspect the appearance of the workpiece by comparing each of the partial reference images with the inspection image,
wherein two of the partial reference images, which are adjacent to each other in the second direction, partially overlap each other by a length not less than a dimensional tolerance of the workpiece in the second direction.
